# EUROPEAN PATENT APPLICATION

(11) **EP 2 975 576 A1**
(43) Date of publication of application: **20.01.2016**
(21) Application number: 14306149.7
(22) Date of filing: 15.07.2014
(51) Int. Cl.: G06T 7/20

(54) **Method of determination of stable zones within an image stream, and portable device for implementing the method**

(71) Applicant: Thomson Licensing, 92130 Issy-les-Moulineaux (FR)
(72) Inventor: Zepeda, Joaquin, 35576 Cesson-Sévigné (FR); Perez, Patrick, 35576 Cesson-Sévigné (FR)
(74) Representative: Huchet, Anne

(57) **Abstract**

The invention concerns a method for determining zones in images captured by the camera embedded in a handheld mobile device. An object in front of the camera is captured and a stream of images captured by said camera is generated, said object appearing in the visual content of said images stream. The method comprises a step of analysis the visual content of the image stream and a step of determining at least one zone in each analyzed image, the zone said "stable" having visual similarity with a zone in each or most of the other images in the stream, said stable zone identifying the object taken by the mobile device. In this manner, the number of zone identifying the object decreases and the matching between a query image and images read from databases is quicker. Moreover, the processing and storage complexity of the index system is more efficient, as well as the geometric verification performed during the matching of images.

## Description

### 1. Technical field

The field of the present disclosure concerns the determination of retrieval of documents that are visually similar to an object viewed by a user. More specifically, the invention relates to the case where the determination of similarity of image portion is performed by a portable device such as a smartphone, or a laptop.

### 2. Background art

The introduction of digital networks has seen the appearance of means of mass storage, digital TV decoders also permitting access to internet type networks in the home, and very powerful graphical means associating the displaying of texts with images. The users face a very considerable quantity of multimedia documents of various types, such as audio, videos, images, text, application/services, etc. The user interfaces must henceforth allow the user to navigate around such multimedia databases and to find the documents that the user wants, doing so in a powerful and user-friendly manner. At the time being, many people use handheld mobile devices to perform data search, and notably search based on graphic object.

Many applications run on handheld mobile devices, such as mobile phones or smartphones. This type of device comprises a camera configured to take photographs and an internal memory able to store the picture data. Certain applications may process the data of pictures taken by such devices. A simple application consists in taking a photography of an object by the handheld mobile device and sending it to remote people through the phone network. These people receive the mailed picture and thus can see the picture object, i.e. the object within its environment. Other applications include field games, or entertainments. For example, the user takes a photo of a famous actor viewable on a magazine page, and sends this photo to a search engine on the network. The search engine tries to find another image from a photo database that has the greatest number of similarities. The database images are associated with information. In this manner, the image having the greatest number of similarities allows to find the name of the photographed actor among the referenced information. Then, the search engine uses the name of the actor to provide the list of movie titles in which this actors plays, or any other information about this actor. With this kind of application, it is quick and easy to retrieve any information from a picture taken by a handheld portable object to provide information.

Comparing pictures requires high computing power for several reasons. The pictures have a higher resolution, so the amount of information per image is larger. Storage capacities of the new databases are growing very fast and the search engines need to process very high volume of graphic data. Finally, more and more devices are able to take good quality photographs, so that the graphic databases are more and more numerous and contain more and more images. It therefore becomes important to optimize data computing process. A solution consists in optimizing the identification of the pictures.

At the time being, content based image selection consists in finding images in an un-annotated database that are similar to a given query image. During the comparison, the whole image is analyzed, but this technics uses a great powerful process. Another solution consists in determining certain region (or zone) in the image and matching only the content region with the other images. A salience mapping may be used for determining these specific regions, and this mapping may not be robust to common changes in image content such as perspective or illumination changes.

There is therefore a need for a new technique for determining specific zone (also called area) in at least one image, these specific zones are able to identify a visual object appearing in this image.

### 3. Summary

The present disclosure proposes a method of analying a stream of images acquired with a camera, at least a part of the images of the stream of images comprising a representation of an object. The method comprises determining at least one area in a current image of the stream of images, the at least one area, called stable area, having visual similarity with areas of a plurality of other images different from the current image in the stream, the at least one stable area identifying the object.

In this manner, the number of areas identifying the object decreases and the matching between a query image and images read from databases is quicker. Moreover, the processing and storage complexity of the index system is more efficient, as well as the geometric verification performed during the matching of images.

Advantageously, the method further comprises detecting picture conditions associated with the stream of images, the determining of the at least one area being performed when the picture conditions change in the stream of images.

According to a specific characteristic, the method the determining of the at least one stable area is performed when camera (11) focus value changes.

According to another characteristic, the determining of the at least one stable area is performed when lighting adjustment value of the camera (11) changes.

According to a particular characteristic, the stream of images is generated when receiving an input command triggering the acquisition of at least one photography by the camera.

Advantageously, acquisition of the stream of images used for determining the at least one stable area starts when input means generating the input command is pressed and ends when said input means is released.

According to another characteristic, acquisition of the stream of images used for determining the at least one stable area starts when input means generating the input command is released, and ends after a determined duration.

According to a specific characteristic, the method further comprises detecting a movement of the camera, wherein images acquired during the detected movement of the camera are not used for the determining.

Advantageously, the end of the movement triggers an homography estimation between the last image acquired before the movement and the first image acquired at the end of the movement, the homography estimation mapping certain part of the content of the last and first images, the determining using the mapped content of the last and first images.

The present disclosure also relates to a computer program product comprising program code instructions for implementing the abovementioned method, when the program is executed on a computer.

The present disclosure also relates to a non-transitory computer-readable carrier medium storing a program which, when executed by a computer, causes the computer to carry out the abovementioned method.

The present disclosure also relates to a device comprising a processor, a memory configured to store a software program, and a camera acquiring a stream of images, at least a part of the images of the stream comprising a representation of an object, wherein the processor is configured for determining at least one area in a current image of the stream of images, the at least one area, called stable area, having visual similarity with areas of a plurality of other images different from the current image in said stream, the stable area identifying the object.

The present disclosure also relates to a server device comprising a processor, a memory configured to store a software program, the server device further comprising means (e.g. a receiver) for receiving through a network a stream of images, at least a part of the images of said stream comprising a representation of an object, wherein the processor is configured for determining at least one area in a current image of the stream of images, the at least one area, called stable area, having visual similarity with areas of a plurality of other images different from the current image in the stream, the at least one stable area identifying the object.

### 4. List of figures

Other characteristics and advantages of the invention will now become apparent with more details within the framework of the description, which follows of exemplary embodiments given by way of illustration while referring to the appended figures, which represent:
- Figure 1 shows the main elements for implementing the method of determining zones identifying an object in an image according to an embodiment of the present disclosure;
- Figure 2 shows an example of image description process implemented in application software downloaded in the handheld mobile device;
- Figure 3 illustrates two pictures before and after the determining of stable region;
- Figure 4 shows two pictures illustrating the matching between a query image and image extracted from the shortlist of 1000 first images;
- Figure 5 shows a flowchart illustrating the mode consisting in determining the stable regions before taking a photo;
- Figure 6 shows the flowchart for illustrating the mode consisting in determining the stable regions after taking a photo.

### 5. Description of a non-limitative embodiment

### 5.1 General principle

The present disclosure relates to a method for determining zones in images captured by the camera embedded in a handheld mobile device. An object in front of the camera is captured and a stream of images captured by said camera is generated, said object appearing in the visual content of said images stream. The method comprises a step of analysis of the visual content of the image stream and a step of determining at least one zone in each analyzed image, the zone said "stable" having visual similarity with a zone in each or most of the other images in the stream, said stable zone identifying the object taken by the mobile device.

In this manner, the number of zone identifying the object decreases and the matching between a query image and images read from databases is more rapid. Moreover, the processing and storage complexity of the index system is more efficient, the determination of visual similarity during the matching of images is also quicker.

### 5.2 General description of an embodiment

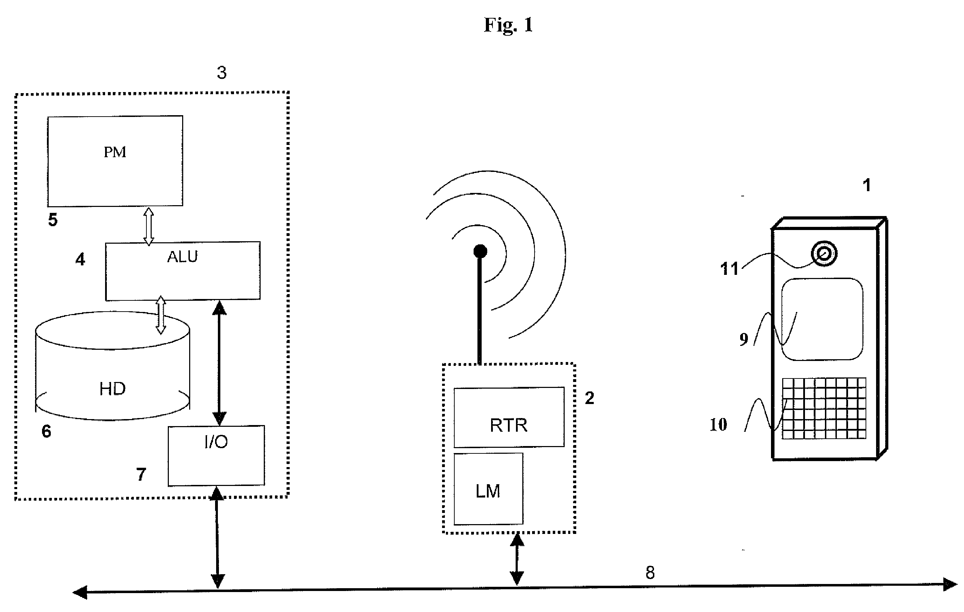

Figure 1 shows the main elements for implementing the method according to an embodiment of the present disclosure. A user has a handheld mobile device 1 communicating through a wireless network (e.g. GSM) with a fixed base 2. Fixed base 2 communicates through lines at very high bandwidth with at least one application server 3. This server 3 is able to receive a stream of picture and associated metadata and perform searches based on the received information and the contents of its own database or distant databases. The mobile device may be a camera, a digital still camera, a mobile phone, a smartphone, a tablet, or any mobile device with means of image processing.

According to one embodiment, the application server 3 comprises a central unit ALU 4 connected to an executable program memory 5 comprising a searching module, at least one hard drive 6 containing a database for data storage non-volatile. The server 3 also includes an input / output interface I/O 7 for communication with a cable 8 or any other bidirectional wired network interface. For example, the server 3 is connected via a telephone line to the Internet. The fixed base 2 shown in Figure 1 manages the communication with the handheld mobile device, according to a known technology. The wireless communication networks may be for example 2G/GSM ("Global System Mobility technology") or 3G/UMTS ("Universal Mobile Telephone System technology"), or 4G LTE ("Long Term Evolution technology").

The handheld mobile device 1 comprises a screen 9, a keyboard 10, and (not shown in the **Fig. 1**) a CPU, a memory, a radio communication module communicating with the base station of the network. The screen 9 may be tactile, in this case the keyboard 10 is integrated into this screen. The mobile device also has an acquisition device such as a camera 11 and software means for creating image data from the taken photograph. The mobile device may contain a module for downloading a program application for determining stable regions in an images stream. The mobile device may also comprise sensors (not shown in the **Fig.1****)** for getting the movement and the environment of the device, such as accelerometer sensor, gyroscope sensor, brightness sensor, ...

After having detailed the different elements of an embodiment, a description will be now made of how these elements cooperate. It should be recalled that the present disclosure is situated in the framework where images are produced by a handheld mobile device and portion of images are matched with portion of other images stored in memory or databases.

According to the present disclosure, the matching of images comprises a step of determining at least one invariance (or "stable") zone of these image, these at least one zone identifying the images.

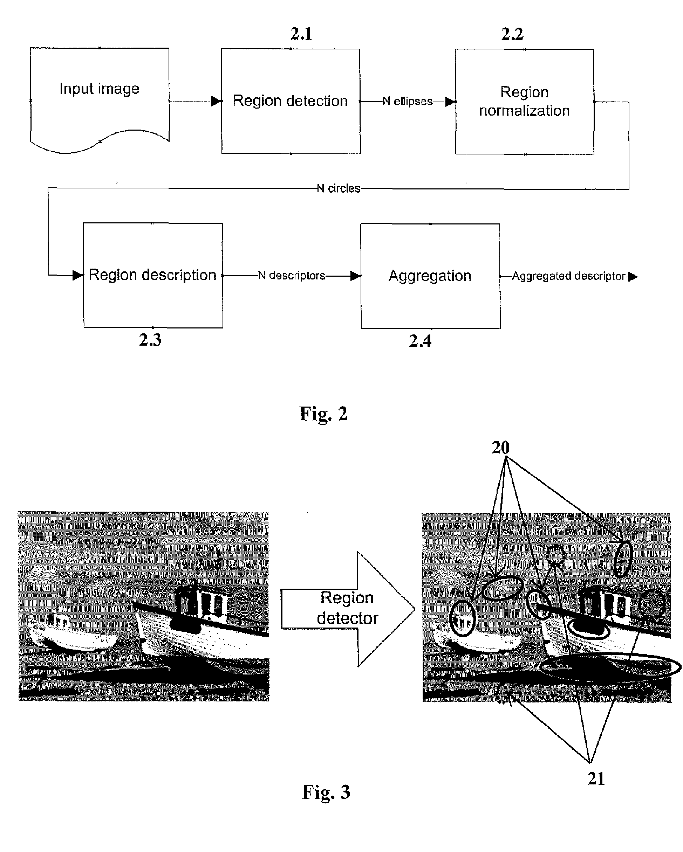

The **Fig. 2** shows a known image description process implemented in an application software downloaded in the handheld mobile device 1. The **Fig. 3** presents two pictures before and after the determining of specific region (or zone) used for characterizing the object within the picture. At the step 2.1, a zone detector is run on the image such as the Hessian affine region detector. The output of this detection process is a set of ellipses of various sizes, these ellipses are shown with a dotted line and continuous line. Other forms may be determined, such as a square, a circle or a rectangle. The shape of these ellipses provides a local estimation of the geometry of the image, and thus the shape should vary consistently with the position of the camera or pose of the objects in the image. In order to be invariant to such differences in pose and object position, at the step 2.2, the image zone inside each ellipse is normalized according to a geometrical form (for example an ellipse or a circle). The zones surrounded by a continuous line shown at the right side of Fig. 3 are stable zones. The zones surrounded by a dotted line are unstable zones, meaning that whether they are detected, and how reliable their shape is, is very sensitive to the picture conditions. For example, the zones containing the bow, the mast and the hatchways of the ship may be considered as stable but a zone containing blue sky, uniform clouds and sand is considered as unstable.

Then, each geometrical form is used to compute a SIFT vector or some other local descriptor (step 2.3). All the local descriptors of a given image are then aggregated to produce a single, aggregated descriptor for the image (step 2.4). For example, the bag-of-words aggregation is carried out by first vector quantizing the local descriptors to obtain a single integer from each descriptor. A histogram of these indices serves as an aggregated descriptor for the image.

At the end of the process shown by the **Fig. 2****,** each image is associated with an aggregated descriptor that is stored in at least one database. The database may be in the handheld mobile device and/or in the hard disk 6 of the server 3. The aggregated descriptor of each database image is added to an index along with an image identifier for the corresponding image. The index is a system that enables memory and time efficient comparison of aggregated descriptors. For bag-of-words aggregated descriptors, the index is an inverted file index. Other existing indices can be based on approximate nearest neighbor search schemes such as KD-trees or product quantization codes. The local descriptors of the image and the circle or ellipse-center coordinate are also stored in a database separate to the index, along with the identifier for the corresponding image. To find matches for a given query image, the query image is first described. The first 1000 or so images are used as a shortlist in the next step. The images in the shortlist are not necessarily visually similar, and hence they need to be checked using geometric verification.

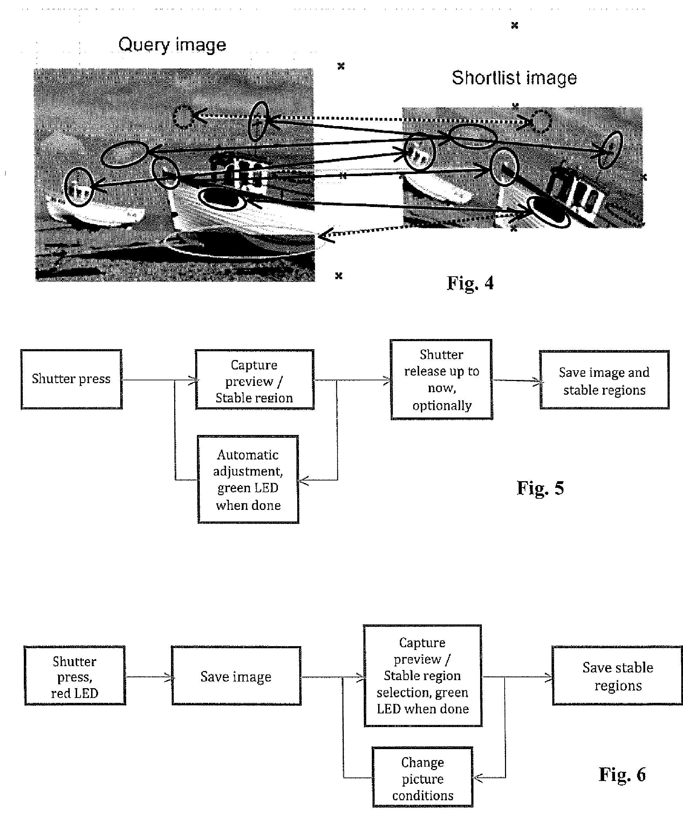

**Fig. 4** illustrates the matching between a query image and image extracted from the shortlist of 1000 first images. Each shortlist image is verified for geometric consistency relative to the query image. To do so, the shortlist local image descriptors are matched to the query local image descriptors. This implicitly establishes matches between ellipse center coordinates in both images. A homography estimation algorithm takes all these pairs of matching points and estimates a homography. If a homography exists that maps the ellipse centers in the query image to their matches in the shortlist image, then the shortlist image in question is considered to be a good match. During the query, each local descriptor of the query image is matched to the closest local descriptor of a shortlist image, implicitly matching ellipses in both images. By viewing the **Fig. 4****,** the dotted line denotes a wrong match between a zone in the query image and a zone in a shortlist image, the continuous show a good match.

It is easy to see the importance of the stability of the zones determined by the process for representing the images. By comparing the zones linked by continuous lines or dotted line of **Fig. 4****,** we can see that corresponding ellipses in the two different pictures may be as few as 20% of the total ellipses in each image. This is due to the limitations of the zone detection algorithms. Thus the detector parameters are often set to produce many zones (several thousand) so that at least a good number of them are stable. But numerous zones increase the complexity of the process.

According to the present disclosure, the determination of the stable zones is more efficient by taking into account several images forming a stream, instead of one picture. By the way, the filtering can be extended to multiple images. Given an image, only ellipses that have corresponding ellipses in all other images of a stream are preserved. A handheld mobile device software has a picture preview mode. This mode displays on the handheld mobile device screen the constant video stream captured by the camera. The present disclosure uses the video stream internally produced by the camera to determine more efficiently stable zones in the stream images. The zones produced by zone generation process, such as shown by the fig. 2, are filtered for keeping only the stable zones. The zone detection system embedded in the handheld mobile device determine specific zone according to a known technics and select among them the stable zone by analyzing the image stream produced by the camera and by applying one or several criterion.

These criterions are firstly divided according to two approaches : passive approach and active approach.

### 5.3 Passive approach

According to this approach, we can distinguish two modes: Constant time step based and Callback-based.

In the constant time step based mode, the stable zones are detected at every time step on the camera preview stream and verified for consistency either on-the-fly or at picture-snap time. As long as the handheld mobile device 1 is switched on and the screen display the video stream produced by the camera, the zone detection system is running.

In the callback-based mode, the zone detection system analyses the picture condition and selects certain images extracted in the video stream for launching the determination of stable zones. The handheld actively changes the picture conditions for the express purpose of verification of region stability right after snapping the picture. The picture conditions are a set of parameters defining the tuning of the camera 11. Typically, the picture conditions comprises one or more of parameters comprised in the following list :
- camera position and pose,
- value of focus (a changing of focus blurs different parts of the image to hence test region stability versus blur),
- value of lighting adjustment (the camera adjust the light sensitivity of the sensor).

A callback function may be added to the camera software that samples the camera preview when the picture conditions change. An image zone is considered stable if its graphic content does not change much during a change of at least one parameter of the above list. For example, if N zones are detected by a known technic, the zone detection system keeps N/2 zones, those which change the less during the change of focus. In this mode, the battery of the handheld mobile device is saved because the zone detection system does not analyze all the images of the stream produced by the picture preview mode.

### 5.4 Active approach

In this approach, the zone detection system becomes active for example according to a user's action. In this approach, the battery is also saved because the zone detection system does not analyze all the images. The zone detection system is active typically when the user takes an action on the camera shutter. According to this approach, we can distinguish several modes.

### Determination before the photo.

The **Fig. 5** shows the flowchart for illustrating the mode consisting in determining the stable regions before taking a photo. At first, the user presses the shutter triggering the beginning of the preview mode. As long as the user maintains the shutter, the zone detection system is active and determines stable zones by using the video stream produced by the preview mode. A green LED is for example lighted on to indicate that the focus adjustment is tuned. According to a variant, there is no green LED to indicate that the focus adjustment is tuned. In other words, the zone detection system analyzes the one or more images captured by the camera and determines the stable regions in the images taken just before the photography. The images just taken before the photography contain probably the most interesting visual content and seem more relevant for identifying the object viewable on the final photography. At the end, the calculated parameters defining one or several stable regions and the images are saved.

In this mode, the preview sampling is carried out while the camera selects the optimal picture condition parameters right before saving the sensor data to the image file. This adds no extra delay to the picture capture process.

### Determination-after the photo.

The **Fig. 6** shows the flowchart for illustrating the mode consisting in determining the stable regions after taking a photo. In this mode, the user presses and releases the shutter, for taking a photography. Just after releasing the shutter, the image is saved in memory, but the zone detection system remains active and continues to be active during a determined time. In other words, the zone detection system analyzes the images captured by the camera and determines the stable regions in the images taken just after the photography. A green LED is for example lighted on. According to a variant, there is no LED. The system analyses the picture conditions that may change. The determined time is for example a duration corresponding to a video stream of 10 images, this number being variable. At the end of this duration, the calculated parameters defining one or several stable regions are saved.

### 5.5 Variant

The following points apply to both the passive and active approaches.

According to an improvement, the handheld mobile device comprises an accelerometer sensor and/or a gyroscope sensor. These sensors may detect the movements of the device. By this way, the handheld device is aware of changes in camera position (displacement, rotations along all axes). When the camera moves, the visual content captured by the camera changes hugely and rapidly. During this time, it is not possible to analyze efficiently the camera preview stream, thus when the sensors (accelerometer and/or a gyroscope) detect a movement of the device then the zone detection system become inactive.

According to another improvement, instead of filtering the stable regions, the zone detection system assigns them a stability coefficient. The stability coefficient may be used as a variable filtering system, the stable regions having a value higher than a hard filtering threshold (tunable) are selected. This lets the user vary the number of regions in the query image until an acceptable number of search images are found.

A second application of the weighting coefficient is to change the importance of the descriptors when carrying out the aggregation. For example, in the standard bag of words approach, the quantized descriptor histogram is computed by adding 1 to the corresponding code word bin for each descriptor. In our proposed approach, the stability coefficient (assumed to be between 0 and 1) is added to the bin instead of 1. In this manner, the descriptor are weighted when they are aggregated, instead of each descriptor has the same weight. The system is thus more reliable and efficient.

Although the present disclosure has been described with reference to the particular embodiments illustrated, it is in no way limited by these embodiments, but is so only by the appended claims. It will indeed be noted that any device able to capture photography is applicable for the implementation of the present disclosure.

As will be appreciated by one skilled in the art, aspects of the present principles can be embodied as a system, method or computer readable medium. Accordingly, aspects of the present principles can take the form of an entirely hardware embodiment, en entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method of analyzing a stream of images acquired with a camera (11), at least a part of the images of said stream of images comprising a representation of an object, **characterized in that** the method comprises determining at least one area in a current image of said stream of images, the at least one area, called stable area, having visual similarity with areas of a plurality of other images different from the current image in said stream, said at least one stable area identifying the object.

2. The method according to claim 1 further comprising detecting picture conditions associated with said stream of images, the determining of said at least one area being performed when the picture conditions change in said stream of images.

3. The method according to claim 2, wherein the determining of the at least one stable area is performed when camera (11) focus value changes.

4. The method according to claim 2, wherein the determining of said at least one stable area is performed when lighting adjustment value of the camera (11) changes.

5. The method according to claim 1 or 2, wherein acquisition of said stream of images is generated when receiving an input command, said input command triggering the acquisition of at least one photography by the camera (11).

6. The method according to claim 5, wherein acquisition of said stream of images used for determining the at least one stable area starts when input means generating the input command is pressed and ends when said input means is released.

7. The method according to claim 5, wherein acquisition of said stream of images used for determining the at least one stable area starts when input means generating the input command is released, and ends after a determined duration.

8. The method according to any claims 1 to 7 further comprising detecting a movement of said camera, wherein images acquired during the detected movement of the camera being not used for said determining.

9. The method according to claim 8, wherein the end of said movement triggers an homography estimation between the last image acquired before the movement and the first image acquired at the end of the movement, the homography estimation mapping certain part of the content of said last and first images, said determining using the mapped content of said last and first images.

10. A computer program product comprising program code instructions for implementing the method according to any claim 1 to 9, when said program is executed on a computer.

11. A non-transitory computer-readable carrier medium storing a program which, when executed by a computer, causes the computer to carry out the method according to any claim 1 to 9.

12. A device comprising a processor, a memory configured to store a software program, and a camera (11) acquiring a stream of images, at least a part of the images of said stream comprising a representation of an object, **characterized in that** the processor is configured for determining at least one area in a current image of said stream of images, the at least one area, called stable area, having visual similarity with areas of a plurality of other images different from the current image in said stream, said at least one stable area identifying the object.

13. A server device comprising a processor, a memory configured to store a software program, the server device further comprising means for receiving (7) through a network (8) a stream of images, at least a part of the images of said stream comprising a representation of an object, **characterized in that** the processor is configured for determining at least one area in a current image of said stream of images, the at least one area, called stable area, having visual similarity with areas of a plurality of other images different from the current image in said stream, said at least one stable area identifying the object.
